# DEMANDE DE BREVET EUROPEEN

(11) **EP 2 991 179 A1**
(43) Date de publication de la demande: **02.03.2016**
(21) Numéro de dépôt: 15177736.4
(22) Date de dépôt: 21.07.2015
(51) Int. Cl.: H02G 15/18

(54) **DISPOSITIF D'INSTALLATION D'UNE GAINE RETRACTABLE SUR UN AGENCEMENT ELECTRIQUE**

(30) Priorité: 27.08.2014 FR 1458018
(71) Demandeur: Nexans, 75008 Paris (FR)
(72) Inventeur: Carpentier, Ludovic, 08200 Floing (FR); Berteloodt, Eric, 08200 Sedan (FR); Vansteenkiste, Peter, 9000 Gent (BE)
(74) Mandataire: Lenne, Laurence

(57) **Abrégé**

L'invention concerne un dispositif d'installation d'une gaine rétractable (5) sur un agencement électrique, comprenant un tube support (3) cylindrique autour duquel est placé la gaine rétractable (5) en condition d'expansion élastique, ce tube support (3) ayant un diamètre interne supérieur au diamètre externe de l'agencement électrique destiné à recevoir la gaine (5), et des moyens de retrait agissant sur la gaine (5) et le tube support (3) pour enlever ce dernier de la gaine, une fois le tube support (3) et la gaine (5) positionnés sur l'agencement électrique, le dispositif comprenant un moyen dit de glissement, apte à faciliter le glissement relatif dudit tube (3) et de la gaine (5) et disposé à l'interface entre ledit tube et la gaine.

Selon l'invention,
- ledit tube support (3) est pourvu d'un filetage longitudinal sur sa surface externe,
- lesdits moyens de retrait comprennent un écrou (1) vissé sur ledit filetage.

## Description

L'invention concerne un dispositif d'installation d'une gaine rétractable sur un agencement électrique.

De telles gaines rétractables en matériau élastomère sont disposées sur une connexion ou une extrémité de câbles de transport électrique et, pour ce faire, sont disposées en position expansée élastiquement sur un tube support cylindrique ayant un diamètre interne supérieur au diamètre externe de l'agencement électrique destiné à recevoir la gaine. Le tube support équipé de la gaine est disposé au-dessus de l'agencement électrique, des moyens de retrait du tube support libèrent la gaine de ce tube support et la gaine vient se positionner par rétractation sur l'agencement électrique.

Le document de brevet EP 0 368 235 décrit un dispositif d'installation d'une telle gaine rétractable sur un agencement électrique comprenant un tube support cylindrique autour duquel est placé une gaine rétractable en condition d'expansion élastique. Il comprend également des moyens de retrait agissant sur la gaine et le tube support pour enlever ce dernier de la gaine, une fois le tube support et la gaine positionnés sur l'agencement électrique.

Ce dispositif comprend une unité d'entraînement comportant un arbre fileté guidant une première partie mobile solidaire du tube support et une seconde partie mobile en butée sur une extrémité de la gaine.

Cet arbre fileté est disposé parallèlement au tube support et à la gaine et guide la première partie qui est constituée d'une première pièce de transmission mécanique radiale connectée au tube support par des tenons radiaux et la seconde partie qui est une seconde pièce de transmission mécanique radiale en butée avec une extrémité de la gaine.

L'arbre fileté est actionné manuellement au moyen d'une mollette disposée à son extrémité libre.

De par la disposition de l'arbre fileté et de par la présence de cet arbre fileté et des pièces de transmission mécanique, un tel dispositif est relativement encombrant.

Par ailleurs, il nécessite un couple relativement important de rotation de l'arbre fileté qui, cette rotation étant transformée en translations par les pièces de transmission, doit faire glisser le tube sous la gaine à l'état expansé, avec des efforts de friction importants.

Enfin, un positionnement longitudinal précis de la gaine sur l'agencement électrique qui doit la recevoir, nécessite un réglage relativement fin et complexe de la position du dispositif.

Par ailleurs, le document de brevet WO 95/11542 décrit un dispositif d'installation d'une gaine rétractable sur un agencement électrique, comprenant un tube support cylindrique autour duquel est placé la gaine rétractable en condition d'expansion élastique, ce tube support ayant un diamètre interne supérieur au diamètre externe de l'agencement électrique destiné à recevoir la gaine, et des moyens de retrait agissant sur la gaine et le tube support pour enlever ce dernier de la gaine, une fois le tube support et la gaine positionnés sur l'agencement électrique.

Selon ce document, le dispositif comprend un moyen de glissement formé d'une bande de matériau perforé avec éventuellement de l'huile de silicone, un lubrifiant ou équivalent, apte à faciliter le glissement relatif du tube et de la gaine et disposé à l'interface entre le tube et la gaine. Ce moyen de glissement peut également être une partie du tube support.

Un tel type de dispositif nécessite également un couple d'actionnement relativement important et n'assure pas un positionnement longitudinal précis de la gaine sur l'agencement électrique qui doit la recevoir.

L'invention résout ces problèmes et, pour ce faire, elle propose un dispositif d'installation d'une gaine rétractable sur un agencement électrique, comprenant un tube support cylindrique autour duquel est placé la gaine rétractable en condition d'expansion élastique, ce tube support ayant un diamètre interne supérieur au diamètre externe de l'agencement électrique destiné à recevoir la gaine, et des moyens de retrait agissant sur la gaine et le tube support pour enlever ce dernier de la gaine, une fois le tube support et la gaine positionnés sur l'agencement électrique, le dispositif comprenant un moyen dit de glissement, apte à faciliter le glissement relatif dudit tube et de la gaine et disposé à l'interface entre ledit tube et la gaine, caractérisé en ce que
- ledit tube support est pourvu d'un filetage longitudinal sur sa surface externe,
- lesdits moyens de retrait comprennent un écrou vissé sur ledit filetage.

Grâce au filetage de la surface externe du tube support, il est réalisé un entraînement direct par rotation sans pièces de transmission et il est ainsi obtenu un dispositif très compact, d'où un encombrement optimalement réduit et la nécessité d'un couple d'entraînement également réduit.

Selon un premier mode de réalisation préféré, lesdits moyens de retrait comportent également une bague disposée autour dudit tube support, entre la gaine et ledit écrou, ladite bague comportant une bride longitudinale sur laquelle est disposée une extrémité de la gaine à l'état rétracté.

De préférence, ledit moyen de glissement est un matériau fluide incompressible et avantageusement une matière visqueuse, par exemple une graisse.

Cette matière aide fortement au glissement de la gaine sur le tube support, et de plus, compte-tenu la présence du filetage sur la surface externe du tube support, cette matière est déplacée par le filetage du tube support, lors du déplacement de ce dernier, et tend à expanser légèrement la gaine et à faciliter son retrait.

Cette matière peut également être un gaz ou un liquide, à condition de la confiner à l'interface entre le tube support et la gaine, par un élément de fermeture de cet interface.

Selon un second mode de réalisation préféré, lesdits moyens de retrait comportent également une bague disposée autour dudit tube support, fixée audit écrou et disposé du côté opposé à la gaine.

De préférence, ledit moyen de glissement est alors un film de matière plastique solidaire de ladite bague par une de ses extrémités, disposé à l'intérieur dudit tube et solidaire dudit écrou par son autre extrémité, en étant disposé à l'interface entre ledit tube support et la gaine.

Le dispositif peut également comporter également un engrenage dont les dents sont emboîtées sur des dents d'engrenage portées par la surface externe dudit écrou.

Avantageusement, ledit engrenage est porté, libre en rotation, sur un élément de clippage sur ladite bague.

Ledit engrenage peut comporter un élément d'actionnement en rotation par un outil de type tournevis électrique.

L'invention concerne également un procédé d'installation d'une gaine rétractable sur un agencement électrique, au moyen d'un tel dispositif, caractérisé en ce qu'il consiste à maintenir manuellement la gaine dans la position souhaitée relativement à l'agencement électrique et à actionner manuellement en rotation ledit écrou.

L'invention concerne enfin un procédé d'installation d'une gaine rétractable sur un agencement électrique, au moyen d'un tel dispositif, caractérisé en ce qu'il consiste à maintenir manuellement la gaine dans la position souhaitée relativement à l'agencement électrique et à actionner en rotation ledit engrenage au moyen d'un outil.

Ce maintien de la gaine assure un réglage facile et contrôlé du positionnement longitudinal de la gaine sur l'agencement électrique.

L'invention est décrite ci-après plus en détail à l'aide de figures représentant uniquement des modes de réalisation préférés de l'invention.
La figure 1 est une vue en perspective d'un dispositif conforme à un premier mode de réalisation de l'invention, à l'état non monté.
La figure 2 est une vue en perspective de détail d'un dispositif conforme à un premier mode de réalisation de l'invention, équipé de la gaine rétractable.
La figure 3 est une vue en coupe longitudinale de ce dispositif avant actionnement.
La figure 4 est une vue en coupe longitudinale de ce dispositif lors de l'actionnement.
La figure 5 est une vue éclatée en perspective d'un dispositif conforme à un second mode de réalisation de l'invention.
La figure 6 est une vue en coupe longitudinale de ce dispositif.
La figure 7 est une vue en perspective d'un dispositif conforme au premier mode de réalisation de l'invention.
La figure 8 est une vue en perspective de détail de la figure 7.

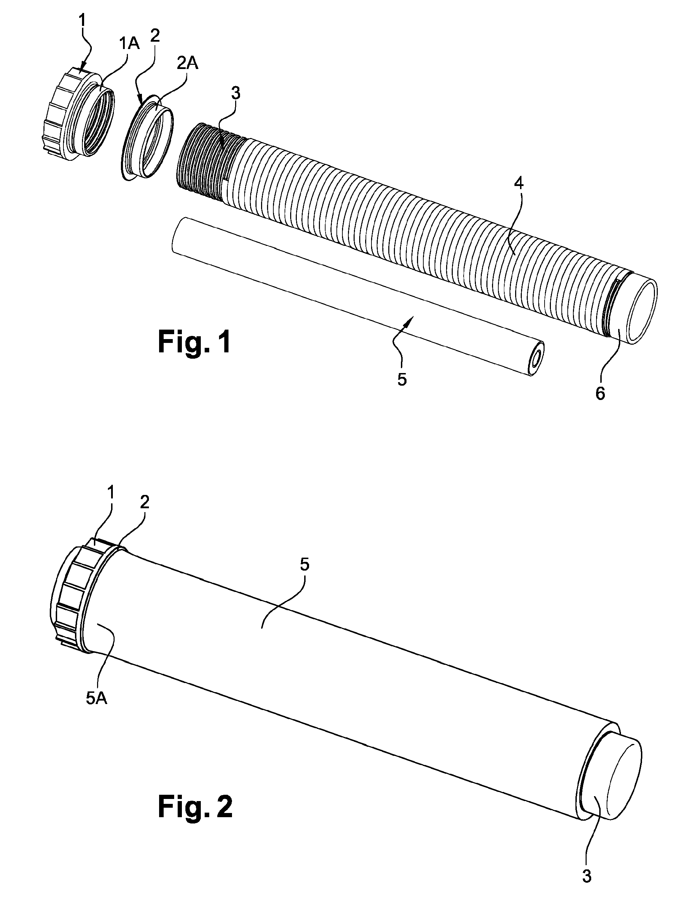

Les figures 1 à 4 représentent un premier mode de réalisation de l'invention.

Le dispositif d'installation d'une gaine rétractable 5 sur un agencement électrique, comprend un tube support cylindrique 3 autour duquel est placé la gaine rétractable en condition d'expansion élastique, comme illustré sur la figure 2, ce tube support ayant un diamètre interne supérieur au diamètre externe de l'agencement électrique destiné à recevoir la gaine.

Le dispositif comporte des moyens de retrait agissant sur la gaine 5 et le tube support 3 pour enlever ce dernier de la gaine, une fois le tube support et la gaine positionnés sur l'agencement électrique.

Le tube support 3 est pourvu d'un filetage longitudinal sur sa surface externe et les moyens de retrait comprennent un écrou vissé 1 sur le filetage et un moyen dit de glissement, apte à faciliter le glissement relatif du tube et de la gaine et disposé à l'interface entre le tube et la gaine.

Les moyens de retrait comportent ici une bague 2 disposée autour du tube 3, entre la gaine 5 et l'écrou 1, la bague 2 comportant une bride longitudinale 2A. Cette bague 2 vient se positionner sur une bride longitudinale 1 A de l'écrou.

A l'état rétracté sur le tube support 3, comme visible sur les figures 2 à 4, une extrémité de la gaine 5 est rétractée contre la bride longitudinale 2A de la bague, comme visible sur les figures 2 à 4.

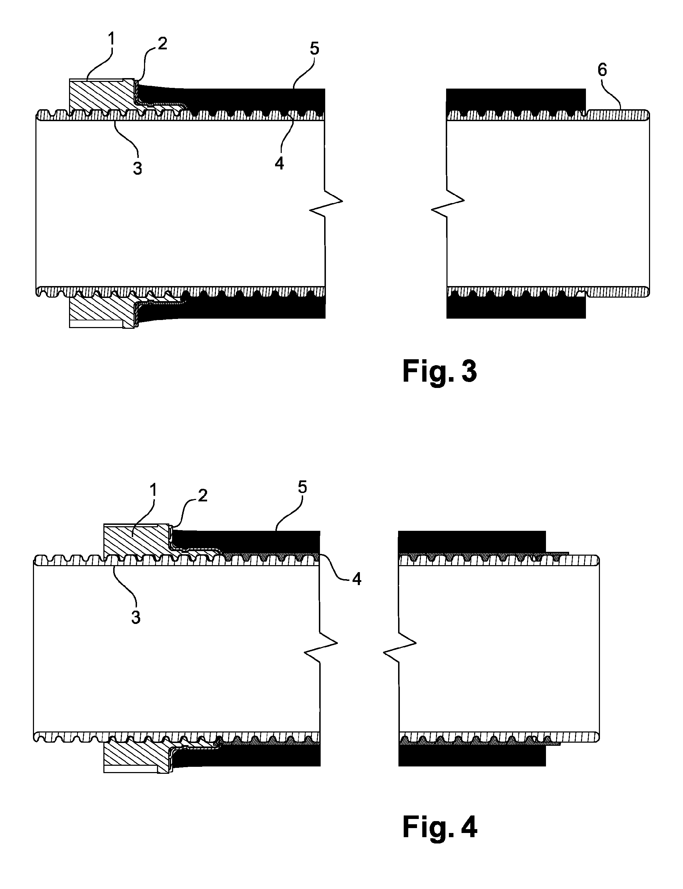

De préférence, le moyen de glissement est un matériau fluide incompressible 4 et avantageusement une matière visqueuse, par exemple une graisse, disposée dans les filets du filetage du tube support 3 et se retrouvant à l'interface entre le tube et la gaine à l'état installé du dispositif, comme également représenté sur la figure 3.

Cette matière aide fortement au glissement de la gaine sur la tube support, et en particulier, compte-tenu de la présence du filetage sur la surface externe du tube support, cette matière incompressible, lors du déplacement en translation de la gaine 5, tend à s'accumuler sur ce filetage et expanser la gaine, ce qui facilite son retrait comme visible sur la figure 4. En effet, la graisse 4 est poussée par l'écrou 1 vers l'extrémité opposée 6 du tube support où son évacuation est contrôlée par l'extrémité du filetage de ce dernier.

Cette matière incompressible peut également être un gaz ou un liquide, à condition de la confiner à l'interface entre le tube support et la gaine, par un élément de fermeture de cet interface à l'extrémité 6 du tube opposé à celle portant l'écrou.

En particulier, comme représenté sur les figures 1 à 4, cette extrémité 6 présente une partie cylindrique non filetée de diamètre externe égal au diamètre externe du filetage. Il en résulte un rétrécissement de section de passage de la matière particulièrement adapté aux matières de basse viscosité.

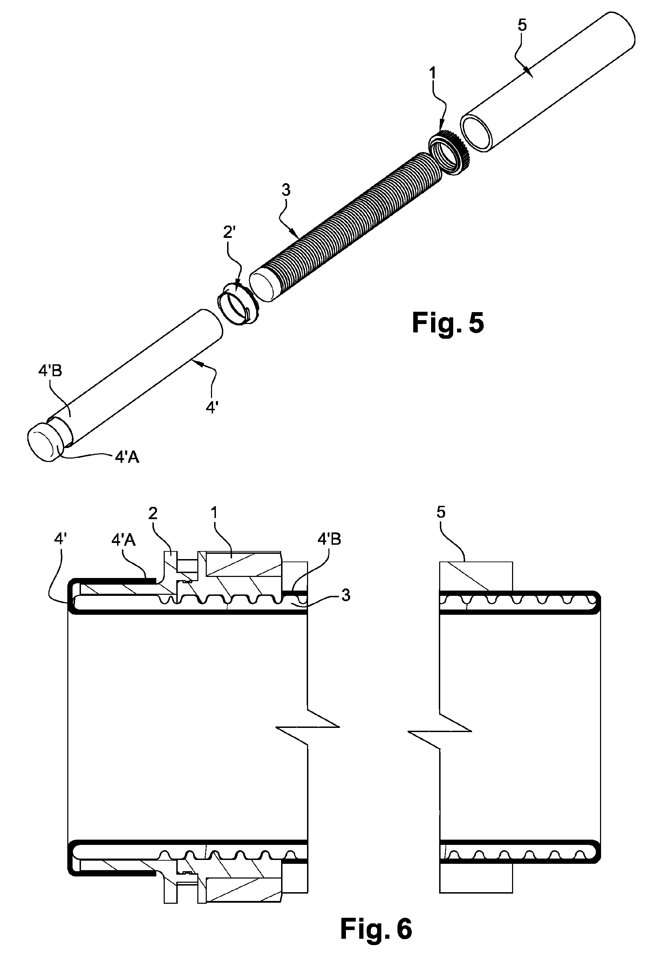

Un second mode de réalisation est représenté sur les figures 5 et 6.

Comme précédemment, le dispositif d'installation d'une gaine rétractable 5 sur un agencement électrique, comprend un tube support cylindrique 3 autour duquel est placé la gaine rétractable en condition d'expansion élastique, comme illustré sur la figure 6, ce tube support ayant un diamètre interne supérieur au diamètre externe de l'agencement électrique destiné à recevoir la gaine. Le dispositif comporte des moyens de retrait agissant sur la gaine 5 et le tube support 3 pour enlever ce dernier de la gaine, une fois le tube support et la gaine positionnés sur l'agencement électrique. Le tube support 3 est pourvu d'un filetage longitudinal sur sa surface externe et les moyens de retrait comprennent un écrou vissé 1 sur le filetage et un moyen dit de glissement, apte à faciliter le glissement relatif du tube et de la gaine et disposé à l'interface entre le tube et la gaine.

Ces moyens de retrait comportent ici une bague 2' disposée autour du tube 3, fixée à l'écrou 1 par encliquetage et disposée du côté opposé à la gaine.

Le moyen de glissement est ici un film 4' de matière plastique, de préférence en silicone, et de forme tubulaire, solidaire de la bague 2 par une de ses extrémités 4'A, disposé à l'intérieur du tube support 3 et solidaire à l'écrou 1 par son autre extrémité 4'B, en étant disposé à l'interface entre le tube 3 et la gaine 5, par son repliement. Ce film 4' tubulaire fonctionne alors tel qu'un tapis roulant.

Lors de la rotation de l'écrou 1 avec la bague 2' solidaire, le film forme coulisse en même temps que ces deux pièces et entraîne avec lui le manchon 5 qui se dégage du tube 5.

Il est à remarquer que, dès que l'extrémité de la gaine opposée à celle adjacente de l'écrou 1, est libérée du tube support 3, elle se contracte contre l'agencement électrique et sa position longitudinale est alors assurée, retenue fermement par la partie de la gaine rétractée. Le retrait du tube du reste de la gaine s'effectue alors très aisément.

Le procédé d'installation d'un dispositif selon l'un ou l'autre des modes de réalisation décrit précédemment consiste à maintenir manuellement la gaine 5 dans la position souhaitée relativement à l'agencement électrique et à actionner manuellement en rotation l'écrou 1.

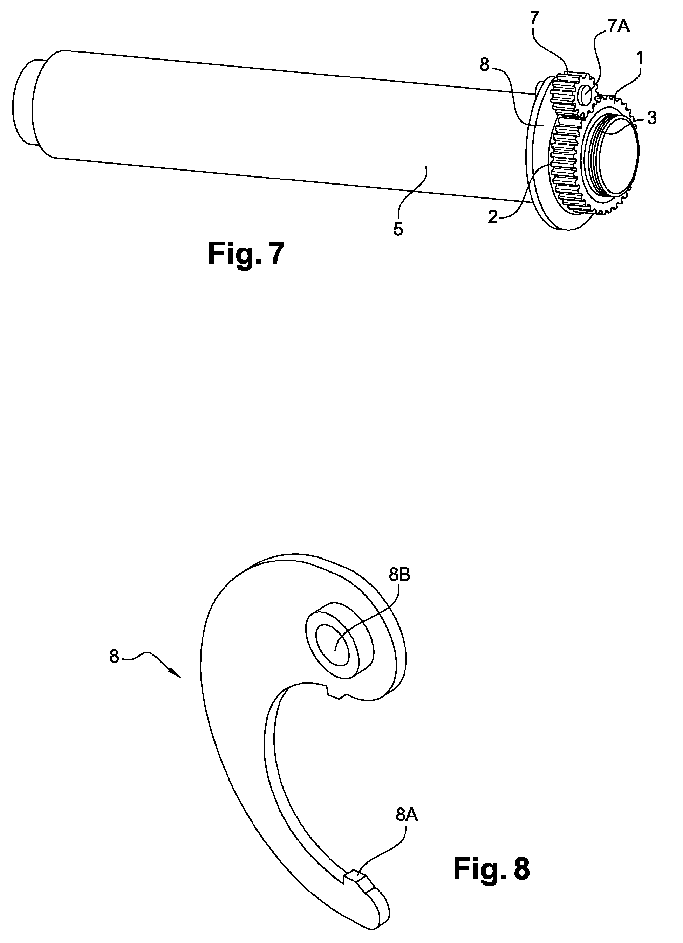

Le procédé d'installation peut également consister à maintenir manuellement la gaine 5 dans la position souhaitée relativement à l'agencement électrique et à actionner en rotation un engrenage 7 au moyen d'un outil, par exemple de type visseuse électrique comme décrit maintenant en référence aux figures 7 et 8.

Cet engrenage 7 a ses dents emboîtées sur des dents d'engrenage portées par la surface externe de l'écrou 1.

Avantageusement, l'arbre de cet engrenage 7 est porté, libre en rotation, dans l'alésage 8B d'un élément de clippage 8 clippé sur la bague 2 par son tenon 8A et représenté sur la figure 8.

L'engrenage comporte un élément d'actionnement en rotation par un outil de type tournevis électrique, de préférence un orifice de section carrée 7A.

Cet accessoire constitué de l'engrenage 7 et de l'élément de clippage 8 permet de réaliser aisément une motorisation du dispositif conforme à l'invention et peut être adapté à l'un ou l'autre des modes de réalisation du dispositif d'installation.

## Revendications

1. Dispositif d'installation d'une gaine rétractable (5) sur un agencement électrique, comprenant un tube support (3) cylindrique autour duquel est placé la gaine rétractable (5) en condition d'expansion élastique, ce tube support (3) ayant un diamètre interne supérieur au diamètre externe de l'agencement électrique destiné à recevoir la gaine (5), et des moyens de retrait agissant sur la gaine (5) et le tube support (3) pour enlever ce dernier de la gaine, une fois le tube support (3) et la gaine (5) positionnés sur l'agencement électrique, le dispositif comprenant un moyen dit de glissement, apte à faciliter le glissement relatif dudit tube (3) et de la gaine (5) et disposé à l'interface entre ledit tube et la gaine, **caractérisé en ce que**
- ledit tube support (3) est pourvu d'un filetage longitudinal sur sa surface externe,
- lesdits moyens de retrait comprennent un écrou (1) vissé sur ledit filetage.

2. Dispositif selon la revendication 1, caractérisé en ce lesdits moyens de retrait comportent également une bague (2) disposée autour dudit tube support (3), entre la gaine (5) et ledit écrou (1), ladite bague (2) comportant une bride longitudinale (2A) sur laquelle est disposée une extrémité de la gaine (5) à l'état rétracté.

3. Dispositif selon la revendication 2, **caractérisé en ce que** ledit moyen de glissement est un matériau fluide incompressible (4).

4. Dispositif selon la revendication 3, **caractérisé en ce que** ledit matériau fluide est une matière visqueuse.

5. Dispositif selon la revendication 1, caractérisé en ce lesdits moyens de retrait comportent également une bague (2') disposée autour dudit tube support (3), fixée audit écrou (1) et disposé du côté opposé à la gaine (5).

6. Dispositif selon la revendication 5, **caractérisé en ce que** ledit moyen de glissement est un film (4') de matière plastique solidaire de ladite bague (2') par une de ses extrémités (4'A), disposé à l'intérieur dudit tube support (3) et solidaire audit écrou (1) par son autre extrémité (4'B), en étant disposé à l'interface entre ledit tube support (3) et la gaine (5).

7. Dispositif selon l'une des revendications précédentes, **caractérisé en ce qu'**il comporte également un engrenage (7) dont les dents sont emboîtées sur des dents d'engrenage portées par la surface externe dudit écrou (1).

8. Dispositif selon la revendication précédente, **caractérisé en ce que** ledit engrenage (7) est porté, libre en rotation, sur un élément de clippage (8) sur ladite bague.

9. Dispositif selon la revendication précédente, caractérisé en ce ledit engrenage (7) comporte un élément (7A) d'actionnement en rotation par un outil de type tournevis électrique.

10. Procédé d'installation d'une gaine rétractable sur un agencement électrique, au moyen d'un dispositif selon l'une des revendications 1 à 6, **caractérisé en ce qu'**il consiste à maintenir manuellement la gaine (5) dans la position souhaitée relativement à l'agencement électrique et à actionner manuellement en rotation ledit écrou (1).

11. Procédé d'installation d'une gaine rétractable sur un agencement électrique, au moyen d'un dispositif selon l'une des revendications 1 et 5 à 9, **caractérisé en ce qu'**il consiste à maintenir manuellement la gaine (5) dans la position souhaitée relativement à l'agencement électrique et à actionner en rotation ledit engrenage (7) au moyen d'un outil.
